# EUROPEAN PATENT APPLICATION

(11) **EP 4 693 463 A1**
(43) Date of publication of application: **11.02.2026**
(21) Application number: 24777426.8
(22) Date of filing: 10.01.2024
(51) Int. Cl.: H01M 4/36, H01M 10/0525, H01M 4/38, H01M 4/485, H01M 4/62

(54) **SECONDARY BATTERY AND ELECTRONIC DEVICE**

(30) Priority: 31.03.2023 CN 202310341446
(71) Applicant: Ningde Amperex Technology Limited, Ningde City, Fujian Province 352100 (CN)
(72) Inventor: ZHOU, Zhuren, Ningde City, Fujian Province 352100 (CN)
(74) Representative: Kraus & Lederer PartGmbB
(86) International application number: PCT/CN2024/071599
(87) International publication number: WO 2024/198631

(57) **Abstract**

This application provides a secondary battery and an electronic apparatus. The secondary battery includes a negative electrode plate. The negative electrode plate includes a negative electrode current collector and a negative electrode active substance layer provided on at least one surface of the negative electrode current collector. The negative electrode active substance layer includes a negative electrode active substance. The negative electrode active substance includes a silicon-oxygen composite material. A peak intensity of a differential thermogravimetry curve of the negative electrode plate at 500°C to 700°C is Y₁, and a peak intensity of the differential thermogravimetry curve of the negative electrode plate at 350°C to 450°C is Y₂, where 0.1≤Y₁/Y₂≤4. The negative electrode plate of the secondary battery provided in this application includes the silicon-oxygen composite material and Y₁/Y₂ is controlled to satisfy the foregoing relationship, which can reduce side reactions and electrolyte consumption in an initial lithium intercalation process of the secondary battery, increase initial coulombic efficiency of the secondary battery, and improve rate performance, cycling performance, and swelling resistance of the secondary battery.

## Description

This application claims priority to Chinese Patent Application No. 202310341446.X, filed with the China National Intellectual Property Administration on March 31, 2023 and entitled "SECONDARY BATTERY AND ELECTRONIC APPARATUS", which is incorporated herein by reference in its entirety.

### TECHNICAL FIELD

This application relates to the field of electrochemical technologies, and in particular, to a secondary battery and an electronic apparatus.

### BACKGROUND

Secondary batteries, such as lithium-ion batteries, feature high operating voltage, high energy density, long cycle life, wide operating temperature range, and the like. With these outstanding features, lithium-ion batteries have been widely used in three major fields including consumer electronics, traction batteries, and energy storage.

With a high theoretical gram capacity, silicon materials have a broad application prospect in lithium-ion batteries. However, during a charge and discharge cycle, with intercalation and deintercalation of lithium ions, silicon materials experience volumetric swelling and contraction, resulting in increased electrolyte consumption and thus affecting the cycling performance of lithium-ion batteries.

### SUMMARY

This application is intended to provide a secondary battery and an electronic apparatus, so as to improve the cycling performance of the secondary battery. Specific technical solutions are as follows.

A first aspect of this application provides a secondary battery including a negative electrode plate. The negative electrode plate includes a negative electrode current collector and a negative electrode active substance layer provided on at least one surface of the negative electrode current collector. The negative electrode active substance layer includes a negative electrode active substance. The negative electrode active substance includes a silicon-oxygen composite material. A peak intensity of a differential thermogravimetry curve of the negative electrode plate at 500°C to 700°C is Y₁, and a peak intensity of the differential thermogravimetry curve of the negative electrode plate at 350°C to 450°C is Y₂, where Y₁/Y₂ satisfies 0.1≤Y₁/Y₂≤4. The secondary battery provided in this application includes the silicon-oxygen composite material and Y₁/Y₂ is controlled to satisfy the foregoing relationship, which can reduce side reactions and electrolyte consumption in an initial lithium intercalation process of the secondary battery, increase initial coulombic efficiency of the secondary battery, and improve rate performance, cycling performance, and swelling resistance of the secondary battery.

In some embodiments of this application, 0.5≤Y₁/Y₂≤2.5. Controlling a value of Y₁/Y₂ to be within the foregoing range helps to further reduce the side reactions and electrolyte consumption in the initial lithium intercalation process of the secondary battery, increase the initial coulombic efficiency of the secondary battery, and improve the rate performance, cycling performance, and swelling resistance of the secondary battery.

In some embodiments of this application, a peak intensity of a Raman spectrum of the negative electrode plate at 1200 cm⁻¹ to 1500 cm⁻¹ is I₁, and a peak intensity of the Raman spectrum of the negative electrode plate at 300 cm⁻¹ to 600 cm⁻¹ is I₂, where I₁/I₂ satisfies 2≤I₁/I₂≤15. Controlling a value of I₁/I₂ to be within the foregoing range helps to further improve the rate performance, cycling performance, and swelling resistance of the secondary battery.

In some embodiments of this application, Dᵥ50 of the silicon-oxygen composite material is 3 µm to 15 µm, and a specific surface area of the silicon-oxygen composite material is 0.2 m²/g to 8 m²/g. Controlling the Dᵥ50 and specific surface area of the silicon-oxygen composite material to be within the foregoing ranges helps to improve the cycling performance, swelling resistance, and fast charge and fast discharge performance of the secondary battery.

In some embodiments of this application, the silicon-oxygen composite material is a core-shell structure; the silicon-oxygen composite material includes a core, a first shell layer, and a second shell layer, the first shell layer and the second shell layer being provided on at least part of a surface of the core; the core includes silicon grains and lithium silicate; the first shell layer includes amorphous carbon; the second shell layer includes a metal oxide and a lithiated metal oxide; and the metal oxide includes at least one of aluminum oxide, titanium dioxide, or niobium pentoxide. The negative electrode plate includes the silicon-oxygen composite material having the foregoing characteristics, which can reduce the possibility of contact between silicon and the electrolyte, reduce side reactions and electrolyte consumption in an initial lithium intercalation process of the secondary battery, increase the initial coulombic efficiency of the secondary battery, and improve the rate performance, cycling performance, and swelling resistance of the secondary battery.

In some embodiments of this application, based on mass of the silicon-oxygen composite material, a mass percentage of the amorphous carbon is 1% to 5%, a sum of mass percentages of the metal oxide and lithiated metal oxide is 1% to 5%, and a sum of mass percentages of the silicon grains and lithium silicate is 92% to 98%. Adjusting the mass percentage of the amorphous carbon, the sum of the mass percentages of the metal oxide and lithiated metal oxide, and the sum of the mass percentages of the silicon grains and lithium silicate to be within the foregoing ranges helps to further improve the initial coulombic efficiency of the secondary battery and improve the rate performance, cycling performance, and swelling resistance of the secondary battery.

In an embodiment of this application, the silicon grains have a size of 0.5 nm to 10 nm. Adjusting the size of the silicon grains to be within the foregoing range can improve the rate performance, cycling performance, and swelling resistance of the secondary battery while allowing the secondary battery to have high energy density.

In an embodiment of this application, the second shell layer of the silicon-oxygen composite material includes a metal element; the metal element includes at least one of aluminum, titanium, or niobium; and based on mass of the second shell layer, a mass percentage of the metal element is 0.1% to 1%. The negative electrode plate includes the silicon-oxygen composite material having the foregoing characteristics, which can reduce the possibility of contact between silicon and the electrolyte, reduce side reactions and electrolyte consumption in an initial lithium intercalation process of the secondary battery, increase the initial coulombic efficiency of the secondary battery, and improve the rate performance, cycling performance, and swelling resistance of the secondary battery.

In some embodiments of this application, the negative electrode active substance further includes graphite; and based on a sum of masses of the silicon-oxygen composite material and the graphite, a mass percentage of the silicon-oxygen composite material is 1% to 15%. The negative electrode active substance further includes graphite and the mass percentage of the silicon-oxygen composite material is adjusted to be within the foregoing range, so that the secondary battery can have good cycling performance and swelling resistance while having high energy density.

In some embodiments of this application, in a charge and discharge cycling test of the secondary battery using step charging at 3C and discharging at 0.5C at 25±1°C, when the number of cycles of the secondary battery is greater than or equal to 800, a swelling rate ratio of the negative electrode plate to the secondary battery is 0.5 to 4. This indicates that the negative electrode plate has a small swelling rate during cycling of the secondary battery, and swelling of the negative electrode active substance is alleviated. In other words, the secondary battery has good swelling resistance.

A second aspect of this application provides an electronic apparatus including the secondary battery according to the first aspect of this application. The secondary battery according to the first aspect of this application has good rate performance, cycling performance, and swelling resistance, and thus the electronic apparatus of this application has a relatively long service life.

This application has the following beneficial effects.

This application provides a secondary battery and an electronic apparatus. The secondary battery includes a negative electrode plate. The negative electrode plate includes a negative electrode current collector and a negative electrode active substance layer provided on at least one surface of the negative electrode current collector. The negative electrode active substance layer includes a negative electrode active substance. The negative electrode active substance includes a silicon-oxygen composite material. A peak intensity of a differential thermogravimetry curve of the negative electrode plate at 500°C to 700°C is Y₁, and a peak intensity of the differential thermogravimetry curve of the negative electrode plate at 350°C to 450°C is Y₂, where Y₁/Y₂ satisfies 0.1≤Y₁/Y₂≤4. The secondary battery provided in this application includes the silicon-oxygen composite material and Y₁/Y₂ is controlled to satisfy the foregoing relationship, which can reduce side reactions and electrolyte consumption in an initial lithium intercalation process of the secondary battery, increase initial coulombic efficiency of the secondary battery, and improve rate performance, cycling performance, and swelling resistance of the secondary battery.

Certainly, when any one of the products or methods of this application is implemented, the advantages described above are not necessarily demonstrated all at the same time.

### BRIEF DESCRIPTION OF DRAWINGS

To describe the technical solutions in some embodiments of this application more clearly, the following briefly describes the accompanying drawings required for describing some embodiments. Apparently, the accompanying drawings in the following descriptions show merely some embodiments of this application, and persons of ordinary skill in the art may still derive other embodiments from the accompanying drawings.
FIG. 1 shows a thermogravimetry (TG) curve and a differential thermogravimetry (DTG) curve of a negative electrode plate in Example 1-8;
FIG. 2 shows a TG curve and a DTG curve of a negative electrode plate in Comparative Example 1;
FIG. 3 shows a TG curve and a DTG curve of a negative electrode plate in Example 2-5;
FIG. 4 shows a Raman spectrum of the negative electrode plate in Example 1-8; and
FIG. 5 shows a Raman spectrum of the negative electrode plate in Example 2-5.

### DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application. Based on some embodiments of this application, all other embodiments obtained by persons of ordinary skill in the art based on this application shall fall within the protection scope of this application.

It should be noted that in specific embodiments of this application, an example in which a lithium-ion battery is used as a secondary battery is used to illustrate this application. However, the secondary battery of this application is not limited to the lithium-ion battery.

A first aspect of this application provides a secondary battery including a negative electrode plate. The negative electrode plate includes a negative electrode current collector and a negative electrode active substance layer provided on at least one surface of the negative electrode current collector. The negative electrode active substance layer includes a negative electrode active substance. The negative electrode active substance includes a silicon-oxygen composite material. A peak intensity of a differential thermogravimetry curve of the negative electrode plate at 500°C to 700°C is Y₁, and a peak intensity of the differential thermogravimetry curve of the negative electrode plate at 350°C to 450°C is Y₂, where Y₁/Y₂ satisfies 0.1≤Y₁/Y₂≤4. For example, a value of Y₁/Y₂ may be 0.1, 0.3, 0.5, 0.7, 0.9, 1.0, 1.2, 1.9, 2.5, 3, 3.5, 4, or within a range defined by any two of these values.

A peak of the differential thermogravimetry curve of the negative electrode plate at 500°C to 700°C corresponds to decomposition of a silicon-containing organic lithium salt (for example, a LixSiOy/ROCO₂Li composite lithium salt, where 0<x≤2, 0<y≤3, and R is methyl, ethyl, or the like); a peak of the differential thermogravimetry curve at 350°C to 450°C corresponds to decomposition of a lithium salt with no silicon (for example, LiF or Li₂O); and a value of Y₁/Y₂ reflects a percentage ratio of the silicon-containing organic lithium salt to the lithium salt with no silicon, where a higher peak intensity indicates a higher percentage of a lithium salt corresponding to this peak. An excessively small value of Y₁/Y₂ is not conducive to increasing the energy density of the secondary battery, and an excessively large value of Y₁/Y₂ affects the kinetic performance, cycling performance, and swelling resistance of the secondary battery. The secondary battery provided in this application includes the silicon-oxygen composite material and the value of Y₁/Y₂ is controlled to be within the range described in this application, which can reduce side reactions and electrolyte consumption in an initial lithium intercalation process of the secondary battery, increase the initial coulombic efficiency and energy density of the secondary battery, and improve the rate performance, cycling performance, and swelling resistance of the secondary battery.

In some embodiments of this application, 0.5≤Y₁/Y₂≤2.5. For example, the value of Y₁/Y₂ may be 0.5, 0.7, 0.9, 1.0, 1.2, 1.5, 1.9, 2.2, 2.5, or within a range defined by any two of these values. Controlling the value of Y₁/Y₂ to be within the foregoing range helps to reduce the side reactions and electrolyte consumption in the initial lithium intercalation process of the secondary battery, improve the initial coulombic efficiency and energy density of the secondary battery, and improve the rate performance, cycling performance, and swelling resistance of the secondary battery.

In some embodiments of this application, a peak intensity of a Raman spectrum of the negative electrode plate at 1200 cm⁻¹ to 1500 cm⁻¹ is I₁, and a peak intensity of the Raman spectrum of the negative electrode plate at 300 cm⁻¹ to 600 cm⁻¹ is I₂, where I₁/I₂ satisfies 2≤I₁/I₂≤15. For example, a value of I₁/I₂ may be 2, 3, 5, 7, 9, 10, 12, 14, 15, or within a range defined by any two of these values. A peak of the Raman spectrum of the negative electrode plate at 1200 cm⁻¹ to 1500 cm⁻¹ corresponds to a characteristic D peak of graphite, while a peak of the Raman spectrum at 300 cm⁻¹ to 600 cm⁻¹ corresponds to a characteristic peak of amorphous silicon. The value of I₁/I₂ reflects a percentage ratio of graphite to silicon in the negative electrode plate, where a higher peak intensity indicates a higher percentage of a substance corresponding to this peak. Controlling the value of I₁/I₂ to be within the foregoing range helps to further improve the rate performance, cycling performance, and swelling resistance of the secondary battery.

In some embodiments of this application, Dᵥ50 of the silicon-oxygen composite material is 3 µm to 15 µm, preferably 5 µm to 11 µm; and a specific surface area of the silicon-oxygen composite material is 0.2 m²/g to 8 m²/g, preferably 0.5 m²/g to 3 m²/g. For example, Dᵥ50 of the silicon-oxygen composite material may be 3 µm, 5 µm, 6 µm, 6.5 µm, 7 µm, 8 µm, 9 µm, 10 µm, 11 µm, 12 µm, 14 µm, 15 µm, or within a range defined by any two of these values; and the specific surface area of the silicon-oxygen composite material may be 0.2 m²/g, 0.5 m²/g, 1 m²/g, 1.1 m²/g, 1.2 m²/g, 1.3 m²/g, 1.5 m²/g, 1.6 m²/g, 1.7 m²/g, 1.8 m²/g, 2 m²/g, 3 m²/g, 5 m²/g, 7 m²/g, 8 m²/g, or within a range defined by any two of these values. During cycling of the secondary battery, HF as a reaction byproduct of the electrolyte corrodes the silicon-oxygen composite material, and accordingly causes a solid electrolyte interface film (SEI film) to grow and corrode toward inside of particles. Dᵥ50 of the silicon-oxygen composite material is controlled to be within the foregoing range, so that a proportion of portions of silicon-oxygen particles corroded by the SEI film is reduced, helping to improve the cycling performance and swelling resistance of the secondary battery. The specific surface area of the silicon-oxygen composite material is controlled to be within the foregoing range, so that the silicon-oxygen composite material has a large specific surface area and accordingly has a large contact area with the electrolyte, facilitating transfer of active ions (for example, Li⁺), thereby improving the kinetic performance and fast charge and fast discharge performance of the secondary battery.

In some embodiments of this application, the silicon-oxygen composite material is a core-shell structure; the silicon-oxygen composite material includes a core, a first shell layer, and a second shell layer, the first shell layer and the second shell layer being provided on at least part of a surface of the core; the core includes silicon grains and lithium silicate; the first shell layer includes amorphous carbon; the second shell layer includes a metal oxide and a lithiated metal oxide; and the metal oxide includes at least one of aluminum oxide, titanium dioxide, or niobium pentoxide. In the silicon-oxygen composite material with the foregoing characteristics, the silicon grains in its core are dispersed in lithium silicate, alleviating swelling of silicon. The first shell layer includes the amorphous carbon, reducing the possibility of contact between silicon and the electrolyte. The second shell layer includes the metal oxide and the lithiated metal oxide, and the metal oxide and the lithiated metal oxide can reduce corrosion of silicon by the electrolyte, thereby reducing side reactions and electrolyte consumption in an initial lithium intercalation process. The first shell layer and the second shell layer are capable of protecting silicon, thereby reducing a percentage of silicon-containing organic lithium salt in a solid electrolyte interface film. This helps to increase the energy density of the secondary battery and improve the kinetic performance and cycling performance of the secondary battery. The negative electrode plate includes the silicon-oxygen composite material having the foregoing characteristics, which can reduce side reactions and electrolyte consumption in an initial lithium intercalation process of the secondary battery, increase the initial coulombic efficiency of the secondary battery, and improve the rate performance, cycling performance, and swelling resistance of the secondary battery.

In some embodiments of this application, the silicon-oxygen composite material includes a core, a first shell layer, and a second shell layer, where the first shell layer and the second shell layer are sequentially provided on at least part of the surface of the core. In some other embodiments, the silicon-oxygen composite material includes a core, a second shell layer, and a first shell layer, where the second shell layer and the first shell layer are sequentially provided on at least part of the surface of the core. This not particularly limited in this application, provided that the objectives of this application can be achieved.

In some embodiments of this application, based on mass of the silicon-oxygen composite material, a mass percentage of the amorphous carbon is 1% to 5%, a sum of mass percentages of the metal oxide and lithiated metal oxide is 1% to 5%, and a sum of mass percentages of the silicon grains and lithium silicate is 92% to 98%. For example, the mass percentage of the amorphous carbon may be 1%, 1.5%, 2%, 2.5%, 3%, 3.5%, 4%, 4.5%, 5%, or within a range defined by any two of these values; the sum of the mass percentages of the metal oxide and lithiated metal oxide may be 1%, 1.5%, 2%, 2.5%, 3%, 3.5%, 4%, 4.5%, 5%, or within a range defined by any two of these values; and the sum of the mass percentages of the silicon grains and lithium silicate may be 92%, 92.5%, 93%, 94%, 95%, 96%, 97%, 98%, or within a range defined by any two of these values. Controlling the mass percentage of the amorphous carbon, the sum of the mass percentages of the metal oxide and lithiated metal oxide, and the sum of the mass percentages of the silicon grains and lithium silicate to be within the foregoing ranges helps to better delivery protection function of the first shell layer and the second shell layer, thereby further improving the initial coulombic efficiency and energy density of the secondary battery and improving the rate performance, cycling performance, and swelling resistance of the secondary battery.

In this application, a mass ratio of the metal oxide to the lithiated metal oxide is not particularly limited, provided that the objectives of this application can be achieved. For example, the mass ratio of the metal oxide to the lithiated metal oxide may be 1:5 to 5:1. In this application, a mass ratio of the silicon grains and lithium silicate are not particularly limited, provided that the objectives of this application can be achieved. For example, the mass ratio of the silicon grains to lithium silicate may be 2:3 to 3.5:1. In this application, a particle size of the core is 3 µm to 15 µm, preferably 4.5 µm to 8 µm.

In some embodiments of this application, the silicon grains have a size of 0.5 nm to 10 nm, for example, the size of the silicon grains may be 0.5 nm, 1 nm, 2.5 nm, 5 nm, 5.5 nm, 6 nm, 6.5 nm, 7 nm, 7.5 nm, 8 nm, 9 nm, 10 nm, or within a range defined by any two of these values. Adjusting the size of the silicon grains to be within the foregoing range can improve the rate performance, cycling performance, and swelling resistance of the secondary battery while allowing the secondary battery to have high energy density.

In some embodiments of this application, the second shell layer of the silicon-oxygen composite material includes a metal element; the metal element includes at least one of aluminum, titanium, or niobium; and based on mass of the second shell layer, a mass percentage of the metal element is 0.1% to 1%. For example, the mass percentage of the metal element may be 0.1%, 0.3%, 0.4%, 0.5%, 0.7%, 0.8%, 0.9%, 1%, or within a range defined by any two of these values. The negative electrode plate includes the silicon-oxygen composite material having the foregoing characteristics, which can reduce the possibility of contact between silicon and the electrolyte, reduce side reactions and electrolyte consumption in an initial lithium intercalation process of the secondary battery, increase the initial coulombic efficiency of the secondary battery, and improve the cycling performance and swelling resistance of the secondary battery.

A preparation method of the silicon-oxygen composite material is not particularly limited in this application, provided that the objectives of this application can be achieved. For example, the silicon-oxygen composite material may be prepared using the following method: Elemental silicon and silicon dioxide are mixed to uniformity; a resulting mixture is put into an evaporation chamber of a deposition furnace, heated to 1100°C to 1300°C for deposition for the first time; and then, SiO blocks formed after deposition in a deposition chamber are collected and subjected to processes such as crushing and grading to obtain a silicon-oxygen material. The silicon-oxygen material is deposited for the second time in an acetylene gas atmosphere, where amorphous carbon is deposited on the surface of the silicon-oxygen material to obtain a silicon-oxygen material with the first shell layer being amorphous carbon on its surface, recorded as a C@SiO material. The C@SiO material is put into an ethanol solution, salts containing metal element (for example, aluminum isopropoxide) and polyvinylpyrrolidone (PVP) are added, and the mixture is stirred to uniformity, spray-dried, and then calcined for the first time under protection of an inert atmosphere to obtain a C@SiO silicon-oxygen material with Al₂O₃ on its surface, recorded as Al₂O_{3@}C@SiO material. The Al₂O₃@C@SiO material and lithium nitride (Li₃N) are mixed to uniformity and then calcined for the second time under protection of an inert atmosphere. During calcination, Li₃N is decomposed into lithium and nitrogen, where lithium under a calcining temperature is molten, can react with Al₂O₃ on the surface of the Al₂O₃@C@SiO material to form lithiated Al₂O₃, and can also react with the silicon-oxygen material inside to ultimately obtain a silicon-oxygen composite material including a first shell layer and a second shell layer. A core is a reaction product of molten lithium and the silicon-oxygen material, including lithium silicate and silicon grains, where the silicon grains are dispersed in lithium silicate. The first shell layer includes amorphous carbon, and the second shell layer includes Al₂O₃ and lithiated Al₂O₃. In the foregoing preparation method, a molar ratio of elemental silicon to silicon dioxide is 1:(0.5 to 2), a molar ratio of aluminum isopropoxide to polyvinylpyrrolidone (PVP) is 1:(0.5 to 2), and a ratio of total mass of aluminum isopropoxide and PVP to mass of the C@SiO material is 2% to 8%. A mass ratio of the Al₂O_{3@}C@SiO material to lithium nitride (Li₃N) is (85:15) to (95:5). The second deposition is performed at 500°C to 700°C for 2 h to 4 h, the first calcination is performed at 500°C to 700°C for 4 h to 6 h, and the second calcination is performed at 600°C to 800°C for 4 h to 6 h.

The foregoing grading method is not particularly limited in this application, provided that the objectives of this application can be achieved. For example, the crushed silicon-oxygen material can be graded using methods such as sieving and air classification. A flow velocity of the acetylene gas is not particularly limited in this application and may be selected based on normal operation in the art, provided that the objectives of this application can be achieved. For example, the flow velocity of the acetylene gas may be 2 L/min to 10 L/min. The inert atmosphere is not particularly limited to any gas in this application, provided that the objectives of this application can be achieved. For example, the inert atmosphere may include but is not limited to at least one of helium or argon.

Under normal conditions, the mass ratio of aluminum isopropoxide and PVP to the silicon-oxygen material, the mass ratio of the Al₂O_{3@}C@SiO material to Li₃N, the temperature and time of the second deposition, and the temperature and time of the second calcination can be changed to control the mass percentage of the amorphous carbon in the silicon-oxygen composite material, the mass percentage of the metal oxide and lithiated metal oxide, and the mass percentage of the silicon grains and lithium silicate. For example, an increase in the mass ratio of aluminum isopropoxide and PVP to the silicon-oxygen material leads to an increase in the mass percentage of the metal oxide and lithiated metal oxide, while a decrease in the mass ratio of aluminum isopropoxide and PVP to the silicon-oxygen material leads to a decrease in the mass percentage of the metal oxide and lithiated metal oxide. An increase in the mass ratio of the Al₂O_{3@}C@SiO material to Li₃N leads to an increase in the mass percentage of the silicon grains and lithium silicate, while a decrease in the mass ratio of the Al₂O_{3@}C@SiO material to Li₃N leads to a decrease in the mass percentage of the silicon grains and lithium silicate. An increase in the temperature of the second deposition leads to an increase in the mass percentage of the amorphous carbon, while a decrease in the temperature of the second deposition leads to a decrease in the mass percentage of the amorphous carbon. An increase in the time of the second deposition leads to an increase in the mass percentage of the amorphous carbon, while a decrease in the time of the second deposition leads to a decrease in the mass percentage of the amorphous carbon. An increase in the temperature of the second calcination leads to a decrease in the mass percentage of the metal oxide and lithiated metal oxide and an increase in the mass percentage of the silicon grains and lithium silicate, while a decrease in the temperature of the second calcination leads to an increase in the mass percentage of the metal oxide and lithiated metal oxide and a decrease in the mass percentage of the silicon grains and lithium silicate. An increase in the time of the second calcination leads to a decrease in the mass percentage of the metal oxide and lithiated metal oxide and an increase in the mass percentage of the silicon grains and lithium silicate, while a decrease in the time of the second deposition leads to an increase in the mass percentage of the metal oxide and lithiated metal oxide and a decrease in the mass percentage of the silicon grains and lithium silicate.

In some embodiments of this application, the negative electrode active substance further includes graphite; and based on a sum of masses of the silicon-oxygen composite material and the graphite, a mass percentage of the silicon-oxygen composite material is 1% to 15%. For example, the mass percentage of the silicon-oxygen composite material may be 1%, 3%, 4%, 5%, 7%, 8%, 9%, 10%, 12%, 15%, or within a range defined by any two of these values. The negative electrode active substance further includes graphite and the mass percentage of the silicon-oxygen composite material is adjusted to be within the foregoing range, so that the secondary battery can have good cycling performance and swelling resistance while having high energy density.

In this application, based on mass of the negative electrode active substance layer, a mass percentage of element silicon is 0.1% to 10%. The mass percentage of element silicon is within the foregoing range, allowing the secondary battery to have good swelling resistance while having high energy density.

Under normal conditions, a value of Y₁/Y₂ is controlled by changing the percentage of the silicon-oxygen composite material in the negative electrode active substance layer and the mass percentage of the silicon grains and lithium silicate. For example, an increase in the percentage of the silicon-oxygen composite material in the negative electrode active substance layer leads to an increase in the value of Y₁/Y₂, while a decrease of the percentage of the silicon-oxygen composite material in the negative electrode active substance layer leads to a decrease in the value of Y₁/Y₂. An increase in the mass percentage of the silicon grains and lithium silicate leads to an increase in the value of Y₁/Y₂, while a decrease in the mass percentage of the silicon grains and lithium silicate leads to a decrease in the value of Y₁/Y₅.

In some embodiments of this application, in a charge and discharge cycling test of the secondary battery using step charging at 3C and discharging at 0.5C at 25±1°C, when the number of cycles of the secondary battery is greater than or equal to 800, a swelling rate ratio of the negative electrode plate to the secondary battery is 0.5 to 4. For example, the swelling rate ratio of the negative electrode plate to the secondary battery may be 0.5, 0.8, 1, 1.5, 2, 2.5, 3, 3.5, 4, or within a range defined by any two of these values. This indicates that the negative electrode plate has a small swelling rate during cycling of the secondary battery, and swelling of the negative electrode active substance is alleviated. In other words, the secondary battery has good swelling resistance. In this application, the charge and discharge cycling test process using step charging at 3C and discharging at 0.5C is as follows: The secondary battery is left standing in a 45°C environment for 5 min, charged to 4.25 V at a constant current of 3C, charged to 4.4 V at a constant current of 2C, charged to 4.4 V at a constant current of 1C, charged to 0.05C at a constant voltage of 4.45 V, left standing for 5 min, discharged to 3.0 V at a constant current of 0.5 C, and left standing for 5 min.

The negative electrode current collector is not particularly limited in this application, provided that the objectives of this application can be achieved. For example, the negative electrode current collector may include copper foil, copper alloy foil, nickel foil, titanium foil, nickel foam, copper foam, or the like. In this application, thicknesses of the negative electrode current collector and the negative electrode active substance layer are not particularly limited, provided that the objectives of this application can be achieved. For example, the thickness of the negative electrode current collector is 4 µm to 12 µm, and the thickness of the negative electrode active substance layer on each surface is 30 µm to 130 µm. In this application, the negative electrode active substance layer may be provided on one or two surfaces of the negative electrode current collector in a thickness direction of the negative electrode current collector. It should be noted that the "surface" herein may be an entire region of the negative electrode current collector, or may be a partial region of the negative electrode current collector. This is not particularly limited in this application, provided that the objectives of this application can be achieved. The negative electrode active substance layer in this application may further include a conductive agent and a binder.

The secondary battery in this application further includes a positive electrode plate. The positive electrode plate is not particularly limited in this application, provided that the objectives of this application can be achieved. For example, the positive electrode plate includes a positive electrode current collector and a positive electrode active substance layer provided on at least one surface of the positive electrode current collector. The positive electrode current collector is not particularly limited in this application, provided that the objectives of this application can be achieved. For example, the positive electrode current collector may be an aluminum foil, an aluminum alloy foil, or the like. The positive electrode active substance layer in this application includes a positive electrode active substance. A type of the positive electrode active substance is not particularly limited in this application, provided that the objectives of this application can be achieved. For example, the positive electrode active substance may include at least one of lithium nickel cobalt manganate (NCM811, NCM622, NCM523, NCM111), lithium nickel cobalt aluminate, lithium iron phosphate, lithium-rich manganese-based material, lithium cobalt oxide (LiCoO₂), lithium manganate, lithium iron manganese phosphate, lithium titanate, or the like. In this application, the positive electrode active substance may further include a non-metal element. For example, the non-metal element includes at least one of fluorine, phosphorus, boron, chlorine, silicon, sulfur, or the like. These elements can further improve the stability of the positive electrode active substance. In this application, thicknesses of the positive electrode current collector and the positive electrode active substance layer are not particularly limited, provided that the objectives of this application can be achieved. For example, the thickness of the positive electrode current collector is 5 µm to 20 µm, preferably 6 µm to 18 µm. The thickness of the positive electrode active substance layer on each surface is 30 µm to 120 µm. In this application, the positive electrode active substance layer may be provided on one or two surfaces of the positive electrode current collector in a thickness direction of the positive electrode current collector. It should be noted that the "surface" herein may be an entire region of the positive electrode current collector, or may be a partial region of the positive electrode current collector. This is not particularly limited in this application, provided that the objectives of this application can be achieved. The positive electrode active substance layer in this application may further include a conductive agent and a binder.

The conductive agent and the binder are not particularly limited, provided that the objectives of this application can be achieved. For example, the conductive agent may include at least one of conductive carbon black (Super P), carbon nanotubes (CNTs), carbon nanofiber, flake graphite, Ketjen black, graphene, or the like. The binder may include at least one of polyacrylic alcohol, sodium polyacrylate, potassium polyacrylate, lithium polyacrylate, polyimide, polyamideimide, styrene butadiene rubber (SBR), polyvinyl alcohol (PVA), polyvinylidene fluoride, polyvinylidene difluoride (PVDF), polytetrafluoroethylene (PTFE), polyvinyl butyral (PVB), water-based acrylic resin, carboxymethyl cellulose (CMC), sodium carboxymethyl cellulose (CMC-Na), or the like.

In this application, the secondary battery further includes an electrolyte. The electrolyte includes a lithium salt and a non-aqueous solvent. The lithium salt may include at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, Li₂SiF₆, lithium bisoxalate borate (LiBOB), or lithium difluoroborate. A concentration of the lithium salt in the electrolyte is not particularly limited in this application, provided that the objectives of this application can be achieved. For example, the concentration of the lithium salt in the electrolyte is 0.9 mol/L to 1.5 mol/L. The non-aqueous solvent is not particularly limited in this application, provided that the objectives of this application can be achieved. For example, the non-aqueous solvent may include but is not limited to at least of a carbonate compound, a carboxylate compound, an ether compound, or another organic solvent. The carbonate compound may include but is not limited to at least one of a linear carbonate compound, a cyclic carbonate compound, or a fluorocarbonate compound. The linear carbonate compound may include but is not limited to at least one of dimethyl carbonate (DMC), diethyl carbonate (DEC), dipropyl carbonate (DPC), methyl propyl carbonate (MPC), ethylene propyl carbonate (EPC), or methyl ethyl carbonate (MEC). The cyclic carbonate may include but is not limited to at least one of ethylene carbonate (EC), propylene carbonate (PC), butylene carbonate (BC), or vinyl ethylene carbonate (VEC). The fluorocarbonate compound may include but is not limited to at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethylethylene carbonate. The carboxylate compound may include but is not limited to at least one of methyl formate, methyl acetate, ethyl acetate, n-propyl acetate, tert-butyl acetate, methyl propionate, ethyl propionate, propyl propionate, γ-butyrolactone, decanolide, valerolactone, or caprolactone. The ether compound may include but is not limited to at least one of dibutyl ether, tetraethylene glycol dimethyl ether, diglyme, 1,2-dimethoxyethane, 1,2-diethoxyethane, 1-ethoxy-1-methoxyethane, 2-methyltetrahydrofuran, or tetrahydrofuran. The another organic solvent may include but is not limited to at least one of dimethyl sulfoxide, 1,2-dioxolane, sulfolane, methyl-sulfolane, 1,3-dimethyl-2-imidazolidinone, N-methyl-2-pyrrolidone, dimethylformamide, acetonitrile, trimethyl phosphate, triethyl phosphate, or trioctyl phosphate.

The secondary battery in this application further includes a separator. The separator is not particularly limited in this application, provided that the objectives of this application can be achieved. For example, a material of the separator may include but is not limited to at least one of polyethylene (PE), polypropylene (PP), and polytetrafluoroethylene-based polyolefin (PO) separator, polyester film (for example, polyethylene terephthalate (PET) film), cellulose film, polyimide film (PI), polyamide film (PA), spandex film, or aramid film. A type of the separator may include but is not limited to at least one of a woven film, a non-woven film (non-woven fabric), a microporous film, a composite film, a laminated film, or a spinning film. The separator in this application may have a porous structure. A pore size is not particularly limited, provided that the objectives of this application can be achieved. For example, the pore size may be 0.01 µm to 1 µm. Thickness of the separator is not particularly limited in this application, provided that the objectives of this application can be achieved. For example, the thickness of the separator may be 5 µm to 500 µm.

The secondary battery in this application further includes a packaging bag for accommodating the positive electrode plate, the separator, the negative electrode plate, the electrolyte, and other known components of the secondary battery in the art. The other components are not limited in this application. The packaging bag is not particularly limited in this application and may be any well-known packaging bag in the art, provided that the objectives of this application can be achieved. For example, an aluminum-plastic film packaging bag may be used.

The secondary battery in this application is not particularly limited, and may include any apparatus in which electrochemical reactions take place. In an embodiment of this application, the secondary battery may include but is not limited to a lithium-ion secondary battery (lithium-ion battery), a sodium-ion secondary battery (sodium-ion battery), a lithium polymer secondary battery, or a lithium-ion polymer secondary battery. The lithium-ion battery structure in this application may be a wound structure, a laminated structure, or the like. A shape of the secondary battery in this application is not particularly limited, provided that the objectives of this application can be achieved. For example, the secondary battery may include but is not limited to a columnar battery, a prismatic battery, a specially shaped battery, or a button battery.

A preparation process of the secondary battery in this application is well known to persons skilled in the art, and is not particularly limited in this application. For example, the preparation process may include but is not limited to the following steps: a positive electrode plate, a separator, and a negative electrode plate are stacked in sequence, the resulting stack is subjected to operations such as winding and folding as required to obtain an electrode assembly of a wound structure, the electrode assembly is put into a packaging bag, an electrolyte is injected into the packaging bag, and then the packaging bag is sealed to obtain a secondary battery; alternatively, a positive electrode plate, a separator, and a negative electrode plate are stacked in sequence, four corners of the entire laminated structure are fixed with tapes to obtain an electrode assembly of a laminated structure, the electrode assembly is put into a packaging bag, an electrolyte is injected into the packaging bag, and then the packaging bag is sealed to obtain a secondary battery. In addition, if necessary, an overcurrent prevention element, a guide plate, and the like may be placed in the packaging bag as required, so as to prevent pressure increase, overcharge, and over-discharge in the secondary battery.

A second aspect of this application provides an electronic apparatus including the secondary battery according to the first aspect of this application. The secondary battery according to the first aspect of this application has good rate performance, cycling performance, and swelling resistance, and thus the electronic apparatus of this application has a relatively long service life.

The electronic apparatus in this application is not particularly limited, and may be any electronic apparatus known in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal display television, a portable cleaner, a portable CD player, a mini-disc player, a transceiver, an electronic notebook, a calculator, a storage card, a portable recorder, a radio, a backup power source, a motor, an automobile, a motorcycle, a motor bicycle, a bicycle, a lighting appliance, a toy, a game machine, a clock, an electric tool, a flash lamp, a camera, a large household battery, a lithium-ion capacitor, or the like.

### Examples

The following describes some embodiments of this application more specifically by using examples and comparative examples. Various tests and evaluations are performed according to the following methods. In addition, unless otherwise specified, "part" and "%" are based on mass.

### Test methods and devices

### Thermogravimetry (TG) curve test

A fully discharged lithium-ion battery was disassembled, and a negative electrode plate was taken out and soaked in dimethyl carbonate (DMC) for 20 min to remove the electrolyte. Subsequently, the negative electrode plate was put into an oven and baked at 80°C for 12 h to obtain the processed negative electrode plate. N₂ was used as a purge gas for heating at a speed of 10°C/min within a range of 35°C to 800°C, and then a TG test sample prepared from the processed negative electrode plate was subjected to a thermogravimetric analysis test to obtain a TG curve and a differential thermogravimetry (DTG) curve of the negative electrode plate.

### Raman spectrum test

A fully discharged lithium-ion battery was disassembled, and a negative electrode plate was taken out and soaked in dimethyl carbonate (DMC) for 20 min to remove the electrolyte. Subsequently, the negative electrode plate was put into an oven and baked at 80°C for 12 h to obtain the processed negative electrode plate, and a Raman test sample prepared from the processed negative electrode plate was subjected to a Raman spectrum test using a Raman spectrum instrument (Jobin Yvon LabRAM HR), where a 532 nm light source is used, a test range is 0 cm⁻¹ to 4000 cm⁻¹, and area of the test sample is 100 µm × 100 µm.

### Test for percentage of each component in silicon-oxygen composite material

A mass percentage of amorphous carbon in the silicon-oxygen composite material was tested using a high-frequency infrared carbon and sulfur analyzer (Shanghai Dekai HCS-140). A silicon-oxygen composite material test sample was heated and combusted at a high temperature under an oxygen-rich condition in a high-frequency furnace to oxidize the amorphous carbon into carbon dioxide, the gas was processed and entered a corresponding adsorption pool to absorb corresponding infrared radiation, and then a corresponding signal was generated by a detector through conversion. The signal was sampled and analyzed through a computer, and then a mass percentage of the amorphous carbon in the silicon-oxygen composite material was outputted.

The silicon-oxygen composite material was soaked in a 0.5 mol/L acetic acid solution for 30 min to dissolve a lithiated metal oxide (for example, LiAlO₂) coating the surface of the silicon-oxygen composite material without dissolving Al₂O₃. Then an inductively coupled plasma spectrometer (ICP-OES (PE Avio 200)) device was used to measure a percentage of a metal element (non-lithium element) in the solution to obtain a percentage of the lithiated metal oxide.

The silicon-oxygen composite material was soaked in a 1 mol/L nitric acid solution for 30 min to dissolve both the metal oxide and lithiated metal oxide coating the surface of the silicon-oxygen composite material. Then a percentage of a metal element (non-lithium element) in the solution was measured using a same method (when the metal was aluminum, a mass percentage of element aluminum was obtained). In this way, a sum of mass percentages of the metal oxide and lithiated metal oxide was obtained. The mass percentage of the metal oxide was calculated by subtracting the measured percentage of the lithiated metal oxide from the sum of the mass percentages of the metal oxide and lithiated metal oxide. A mass ratio of the metal oxide to the lithiated metal oxide was obtained by dividing the mass percentage of the metal oxide by the mass percentage of the lithiated metal oxide.

After percentages of element silicon and element lithium in the silicon-oxygen composite material were measured using ICP-OES (PE Avio 200), the percentage of element lithium in the lithiated metal oxide was subtracted from the percentages of element silicon and element lithium in the silicon-oxygen composite material to obtain a percentage of element lithium in lithium silicate, and then a mass percentage of lithium silicate was calculated. A percentage of silicon in lithium silicate was subtracted from the percentage of element silicon to calculate a mass percentage of silicon grains, and then a sum of mass percentages of the silicon grains and lithium silicate was calculated. A mass ratio of the silicon grains to the lithium silicate was obtained by dividing the mass percentage of the silicon grains by the mass percentage of the lithium silicate.

### Particle size test

A laser particle size tester (MasterSizer 2000) was used to test particle size distribution of the silicon-oxygen composite material. Dᵥ50 is a particle size where the cumulative distribution by volume of a material reaches 50% as counted from the small particle size side.

### Specific surface area test

A specific surface area tester (TriStar 3020) was used to test a nitrogen adsorption and desorption curve of the silicon-oxygen composite material, and then a specific surface area of the silicon-oxygen composite material was obtained through calculation using a BET calculation method.

### Size test for silicon grains

An X-ray powder diffractometer (POWDIX 600/300) was used to perform an XRD test on the material, and a peak close to 28.5° was calculated using the Scherrer Formula to obtain a size of the silicon grains.

### Gram capacity and initial coulombic efficiency test

The silicon-oxygen composite material, a conductive agent conductive carbon black, and a binder styrene butadiene rubber were mixed at a mass ratio of 8:1:1, and then deionized water was added as a solvent to prepare a negative electrode slurry with a solid percentage of 25wt%. The slurry was stirred to uniformity. The negative electrode slurry was uniformly applied on a negative electrode current collector copper foil with a thickness of 10 µm using a scraper with a size of 50 µm, and dried at 70°C to obtain a negative electrode plate with one surface coated with a negative electrode active substance layer with a thickness of 45 µm. The negative electrode plate was dried, rolled, and then punched by a punching machine to form a small disc with a diameter of 14 mm as an operating electrode plate. The small disc was weighed and its mass was recorded. A circular lithium sheet with a diameter of 15 mm was used as an opposite-polarity electrode plate. A separator and an electrolyte were prepared using the method in Example 1-1. The separator was cut into a disc with a diameter of 16 mm. Then these parts obtained were assembled in a dry argon atmosphere glove box to obtain a CR2032-type button half cell. The button half cell was left standing for 5 min at a test temperature of 25°C, discharged to 0.005 V at a constant current of 0.1C, and charged to 0.005C at a constant voltage of 0.005 V, and a lithium intercalation capacity was recorded as C₀. The button half cell was left standing for 5 min and then charged to 0.8 V at a constant current of 0.1C, and a lithium deintercalation capacity was recorded as C₁. A gram capacity of the silicon-oxygen composite material, measured in mAh/g, was obtained by dividing C₁ by the mass of the silicon-oxygen composite material, where mass of silicon-oxygen composite material = (mass of small disc - mass of copper foil) × 0.8, and initial coulombic efficiency = C₁/C₀ × 100%.

A method for testing the gram capacity and initial coulombic efficiency of the graphite/common silicon-oxygen material/pre-lithiated silicon-oxygen material in the comparative examples included the same steps for testing the gram capacity and initial coulombic efficiency
test of the foregoing silicon-oxygen composite material, except that the silicon-oxygen composite material was replaced with the foregoing material.

### Alternating-current impedance test

A to-be-tested lithium-ion battery in an example/comparative example was taken, and a copper wire was connected to the lithium-ion battery as a reference electrode to obtain a three-electrode battery. The reference electrode copper wire was plated with lithium at a current of 20 µA for 6 h. After lithium was plated, an electrochemical impedance spectrum (EIS) of the three-electrode battery was tested. The lithium-plated three-electrode battery was connected to an electrochemical station (Bio-Logic VMP3B, from French Bio-Logic Company) for testing the EIS of the three-electrode battery within a test frequency range of 30 mHz to 50 kHz at a amplitude of 5 mV. After data was collected, the data was analyzed using an impedance complex plane graph, to obtain alternating-current impedance Rct of the lithium-ion battery, measured in mΩ,.

### Rate performance test

A lithium-ion battery under test in the example/comparative example was left standing at a test temperature of 25°C for 5 min, charged to 4.45 V at a constant current of 0.7C, charged to 0.05C at a constant voltage of 4.45 V, left standing for 5 min, and discharged to 3.0 V at a constant current of 0.2C, and a discharge capacity at 0.2C was recorded. Then, the lithium-ion battery was left standing for 5 min, the foregoing charging process was repeated, and then the lithium-ion battery was discharged at a constant current of 2C, and a discharge capacity at 2C was recorded. Rate performance = discharge capacity at 2C/discharge capacity at 0.2C × 100%.

### Cycling performance and swelling resistance test

A lithium-ion battery under test was left standing at a test temperature of 45°C for 5 min, and an initial thickness of the lithium-ion battery was recorded as MMC₀. The lithium-ion battery was charged to 4.25 V at a constant current of 3C, charged to 4.4 V at 2C, charged to 4.45 V at 1C, and charged to 0.05C at a constant voltage of 4.45 V, and a discharge capacity of the lithium-ion battery was recorded as C₄. Then the lithium-ion battery was left standing for 5 min, discharged to 3.0 V at a constant current of 0.5C, and left standing for 5 min. The foregoing charge and discharge cycling process using step charging at 3C and discharging at 0.5C was repeated 400 times, and then a thickness MMC₁ and a discharge capacity C₅ of the lithium-ion battery were recorded. Cycling capacity retention rate after 400 cycles (%) = C₅/C₄ × 100%, and cycling swelling rate after 400 cycles (%) = (MMC₁ - MMC₀)/MMC₀ × 100%.

### Swelling rate ratio test for negative electrode plate to lithium-ion battery after 800 cycles

Lithium-ion batteries under test were divided into two groups; one group was subjected to 800 cycles according to the foregoing cycling performance and swelling resistance test process, where an initial thickness of each lithium-ion battery was MMC₀, and the thickness of each lithium-ion battery after 800 cycles was MMC₂. Then the lithium-ion batteries fully discharged after 800 cycles were disassembled, and thickness H₁ of each negative electrode plate was measured. The other group of lithium-ion batteries were directly disassembled, and an initial thickness H₀ of each negative electrode plate was measured. Swelling rate ratio of negative electrode plate to lithium-ion battery after 800 cycles = (MMC₂ - MMC₀)/(H₁ - H₀).

### Energy density test

In an environment of 25°C, the lithium-ion batteries in the examples were charged and discharged according to the following operation process to obtain a discharge capacity of each lithium-ion battery: each lithium-ion battery was charged to 4.45 V at a constant current of 0.7C, charged to 0.05C at a constant voltage of 4.45 V, left standing for 5 min, discharged to 3.0 V at a constant current of 0.2C, and left standing for 5 min, and then a discharge capacity D was obtained. After charged to 3.85 V at the constant current of 0.7C, the lithium-ion battery was charged to 0.05C at a constant voltage of 3.85 V, and a length L, a width W, and a height H of the lithium-ion battery were measured using a laser thickness tester to obtain the volume of the lithium-ion battery V = L × W × H. Energy density of the lithium-ion battery (E_{D}) = D/V, measured in Wh/L.

### Example 1-1

### <Preparation of silicon-oxygen composite material>

Step 1. Elemental silicon and silicon dioxide were mixed to uniformity at a molar ratio of 1:1 and heated to 1200°C in an evaporation chamber of a deposition furnace; and after evaporation, SiO blocks formed in a deposition chamber after deposition (first deposition) were collected and subjected to processes such as crushing and grading to obtain a silicon-oxygen material with a Dᵥ50 of 7 µm.

Step 2. The material obtained in step 1 was put into a vapor deposition furnace, acetylene gas was introduced at a flow velocity of 3 L/min, deposition was performed at 600°C for 3 h (second deposition), and a first shell layer amorphous carbon was deposited on the surface of the silicon-oxygen material to obtain a silicon-oxygen material with amorphous carbon on its surface, recorded as C@SiO material.

Step 3. The C@SiO material was put into an ethanol solution, aluminum isopropoxide and polyvinylpyrrolidone (PVP) were added at a molar ratio of 1:1, and a resulting mixture was stirred to uniformity, spray-dried, and then calcined for the first time under protection of an argon atmosphere to obtain a C@SiO material with Al₂O₃ on surface, recorded as Al₂O_{3@}C@SiO material. The first calcination was performed at 600°C for 5 h, and a ratio of total mass of aluminum isopropoxide and PVP to mass of the C@SiO material was A%, where A% was 2%.

Step 4. The Al₂O_{3@}C@SiO material and lithium nitride (Li₃N) were mixed to uniformity at a mass ratio of 95:5, and calcined for the second time under protection of an argon atmosphere to obtain a silicon-oxygen composite material with a first shell layer and a second shell layer on surface. The second calcination was performed at 700°C for 5 h; a core of the silicon-oxygen composite material includes silicon grains and lithium silicate; the first shell layer includes amorphous carbon; and the second shell layer includes Al₂O₃ and lithiated Al₂O₃.

### <Preparation of negative electrode plate>

The foregoing prepared silicon-oxygen composite material was mixed with graphite to uniformity to obtain a negative electrode active substance. Based on a sum of masses of the silicon-oxygen composite material and graphite, a mass percentage of the silicon-oxygen composite material is 3%. A particle size Dᵥ50 of graphite was 14.2 µm, and a specific surface area thereof was 1.02 m²/g.

The negative electrode active substance, a conductive agent conductive carbon black, a binder styrene butadiene rubber, and a thickener sodium carboxymethylcellulose were mixed at a mass ratio of 97:0.5:0.4:2.1, and then deionized water was added as a solvent to prepare a negative electrode slurry with a solid percentage of 46wt%. The slurry was stirred to uniformity. The negative electrode slurry was uniformly applied on one surface of a negative electrode current collector copper foil with a thickness of 12 µm, and the copper foil was dried at 85°C for 4 h to obtain a negative electrode plate with one surface coated with a negative electrode active substance layer with a thickness of 60 µm. The foregoing steps were repeated on the other surface of the copper foil to obtain a negative electrode plate with both surfaces coated with the negative electrode active substance layer. Subsequently, the negative electrode plate was dried in vacuum at 85°C for 4 h, and then cold-pressed, trimmed, and slit to obtain a negative electrode plate with a specification of 76.6 mm × 875 mm.

### <Preparation of positive electrode plate>

A positive electrode active substance lithium cobalt oxide, a conductive agent conductive carbon black, and a binder PVDF were mixed at a mass ratio of 96:2:2, NMP was added as a solvent, and a resulting mixture was stirred to uniformity to prepare a positive electrode slurry with a solid percentage of 75wt%. The positive electrode slurry was uniformly applied on one surface of a positive electrode current collector aluminum foil with a thickness of 13 µm, and dried at 90°C to obtain a positive electrode plate with one surface coated with a positive electrode active substance layer with a thickness of 50 µm. The foregoing steps were repeated on the other surface of the aluminum foil to obtain a positive electrode plate with both surfaces coated with the positive electrode active substance layer. Subsequently, the positive electrode plate was dried in vacuum at 90°C for 4 h, and then cold-pressed, trimmed, and slit to obtain a positive electrode plate with a specification of 74 mm × 867 mm.

### <Preparation of electrolyte>

In a dry argon atmosphere glove box, a lithium salt LiPF₆ was added and dissolved in a solvent mixture containing basic organic solvents DMC, DEC, and EC at a ratio of DMC:DEC:EC=1:1:1, a resulting mixture was mixed to uniformity to obtain an electrolyte, and vinylene carbonate was added as an additive into the electrolyte, where based on mass of the electrolyte, a mass percentage of the lithium salt was 12.5%, a mass percentage of vinylene carbonate was 2%, and the remaining was the basic organic solvents.

### <Preparation of separator>

PVDF and aluminum oxide were mixed at a mass ratio of 9:1, NMP was added as a solvent to prepare a slurry with a solid content of 12wt%, and the slurry was stirred to uniformity, evenly applied on one surface of a substrate PP film with a thickness of 7 µm, and dried to obtain a separator with one surface coated with a coating having a size of 2 µm.

### <Preparation of lithium-ion battery>

The foregoing prepared positive electrode plate, separator and negative electrode plate were sequentially stacked so that the separator was located between the positive electrode plate and the negative electrode plate to provide separation, and then a resulting stack was wound to obtain an electrode assembly. After tab welding, the electrode assembly was placed into an aluminum-plastic film packaging bag, and dried and dehydrated in a vacuum oven at 85°C for 12 h. The electrolyte prepared was injected; and then processes such as vacuum packaging, standing, formation, and shaping were performed to obtain a lithium-ion battery.

### Example 1-2 to Example 1-10

Example 1-2 to Example 1-10 were the same as Example 1-1 except that preparation parameters in <preparation of silicon-oxygen composite material> were adjusted according to Table 1.

### Example 1-11

Example 1-11 was the same as Example 1-1 except that the silicon-oxygen composite material was obtained using the following process of <preparation of silicon-oxygen composite material>.

### <Preparation of silicon-oxygen composite material>

Step 1. Elemental silicon and silicon dioxide were mixed to uniformity at a molar ratio of 1:1 and heated to 1200°C in an evaporation chamber of a deposition furnace; and after evaporation, SiO blocks formed in a deposition chamber after deposition (first deposition) were collected and subjected to processes such as crushing and grading to obtain a silicon-oxygen material with a Dᵥ50 of 7 µm.

Step 2. The silicon-oxygen material was put into an ethanol solution, aluminum isopropoxide and polyvinylpyrrolidone (PVP) were added at a molar ratio of 1:1, and a resulting mixture was stirred to uniformity, spray-dried, and then calcined for the first time under protection of an argon atmosphere to obtain a silicon-oxygen material with Al₂O₃ on surface, recorded as Al₂O₃@SiO material. The first calcination was performed at 600°C for 5 h, and a ratio of total mass of aluminum isopropoxide and PVP to mass of the silicon-oxygen material was A%, where A% was 4%.

Step 3. The Al₂O₃@SiO material obtained in step 2 was put into a vapor deposition furnace, acetylene gas was introduced at a flow velocity of 3 L/min, deposition was performed at 600°C for 5 h (second deposition), and a first shell layer amorphous carbon was deposited on the surface of the Al₂O₃@SiO material to obtain an Al₂O₃@SiO material with amorphous carbon on surface, recorded as C@Al₂O₃@SiO material.

Step 4. The C@Al₂O₃@SiO material and Li₃N were mixed to uniformity at a mass ratio of 90:10, and calcined for the second time under protection of an argon atmosphere to obtain a silicon-oxygen composite material with a first shell layer and a second shell layer on surface. The second calcination was performed at 600°C for 5 h. A core of the silicon-oxygen composite material includes silicon grains and lithium silicate; the first shell layer includes amorphous carbon; and the second shell layer includes Al₂O₃ and lithiated Al₂O₃.

### Example 2-1

Example 2-1 was the same as Example 1-8 except that the mass percentage of the silicon-oxygen composite material was adjusted according to Table 3.

### Example 2-2 to Example 2-6

Example 2-2 to Example 2-6 were the same as Example 2-1 except that the mass percentage of the silicon-oxygen composite material was adjusted according to Table 3.

### Comparative Example 1

Comparative Example 1 was the same as Example 1-1 except that the silicon-oxygen composite material was replaced with a purchased artificial graphite material (Aladdin, G434784).

### Comparative Example 2

Comparative Example 2 was the same as Example 1-1 except that the silicon-oxygen composite material was replaced with a purchased common silicon-oxygen material (Aladdin, S431223).

### Comparative Example 3

Comparative Example 3 was the same as Example 1-1 except that the silicon-oxygen composite material was replaced with a pre-lithiated silicon-oxygen material prepared using the following process of <preparation of pre-lithiated silicon-oxygen material>.

<Preparation of pre-lithiated silicon-oxygen material>: Step 1. Elemental silicon and silicon dioxide were mixed to uniformity at a molar ratio of 1:1 and heated to 1200°C in an evaporation chamber of a deposition furnace; and after evaporation, SiO blocks formed in a deposition chamber after deposition (first deposition) were collected and subjected to processes such as crushing and grading to obtain a silicon-oxygen material with a Dᵥ50 of 7 µm.

Step 2. The material obtained in step 1 was put into a vapor deposition furnace, acetylene gas was introduced at a flow velocity of 3 L/min, deposition was performed at 600°C for 3 h (second deposition), and amorphous carbon was deposited on the surface of the silicon-oxygen material to obtain a silicon-oxygen material with a first shell layer amorphous carbon on its surface, recorded as C@SiO material.

Step 3. The C@SiO material and lithium nitride (Li₃N) were mixed to uniformity at a mass ratio of 95:5, and calcined for the second time under protection of an argon atmosphere to obtain a pre-lithiated silicon-oxygen material with a first shell layer and a second shell layer on surface. The second calcination was performed at 700°C for 5 h. The first shell layer includes amorphous carbon.

Preparation parameters and performance parameters of the examples and comparative examples are shown in Table 1 to Table 3.

**Table 1**

| | A% | Mass ratio of Al₂O₃@C@SiO material to Li₃N | Temperature of second deposition (°C) | Time of second deposition (h) | Temperature of second calcination (°C) | Time of second calcination (h) |
|---|---|---|---|---|---|---|
| Example 1-1 | 2% | 95:5 | 600 | 3 | 700 | 5 |
| Example 1-2 | 4% | 95:5 | 600 | 3 | 700 | 5 |
| Example 1-3 | 6% | 95:5 | 600 | 3 | 700 | 5 |
| Example 1-4 | 8% | 95:5 | 600 | 3 | 700 | 5 |
| Example 1-5 | 4% | 90:10 | 600 | 3 | 600 | 5 |
| Example 1-6 | 4% | 90:10 | 600 | 3 | 600 | 3 |
| Example 1-7 | 4% | 90:10 | 600 | 3 | 600 | 7 |
| Example 1-8 | 4% | 90:10 | 600 | 5 | 600 | 5 |
| Example 1-9 | 4% | 90:10 | 600 | 7 | 600 | 5 |
| Example 1-10 | 4% | 85:15 | 600 | 5 | 600 | 5 |
| Example 1-11 | 4% | 90:10 | 600 | 5 | 600 | 5 |

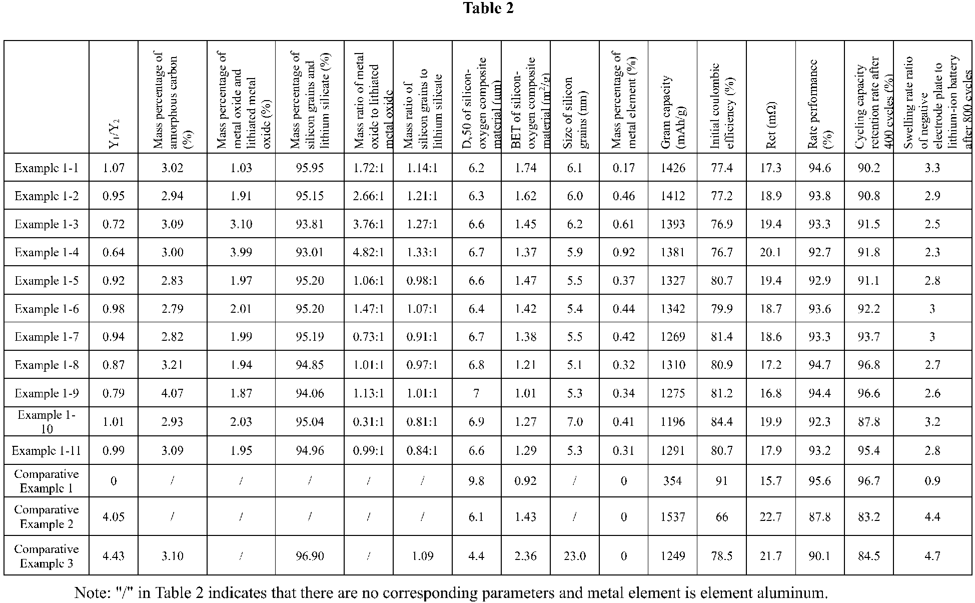

It can be seen from Example 1-1 to Example 1-11 and Comparative Example 1 to Comparative Example 3 that an excessively small value of Y₁/Y₂ results in a low gram capacity of the corresponding negative electrode active material, and this is not conducive to increasing the capacity of the lithium-ion battery. For example, as compared to Comparative Example 1, the gram capacity of the negative electrode active material in these examples of this application is more than 3 times the gram capacity of the artificial graphite material in Comparative Example 1, that is, the lithium-ion battery in these examples of this application has a higher capacity. The lithium-ion battery in Comparative Example 1 has good rate performance, cycling performance, and swelling resistance, but does not have high capacity. An excessively large value of Y₁/Y₂ results in a large alternating-current impedance of the lithium-ion battery, low rate performance and cycling capacity retention rate, and high swelling rate ratio of the negative electrode plate to the battery after 800 cycles. For example, as compared to Comparative Example 2 and Comparative Example 3, the lithium-ion battery in these examples of this application simultaneously has lower alternating-current impedance, higher rate performance and cycling capacity retention rate, and lower swelling rate ratio of the negative electrode plate to the battery after 800 cycles. The negative electrode plate of the lithium-ion battery in these examples of this application includes a silicon-oxygen composite material, and when Y₁/Y₂ satisfies 0.1≤Y₁/Y₂≤4, the lithium-ion battery simultaneously has lower alternating-current impedance, higher capacity, rate performance and cycling capacity retention rate, and lower swelling rate ratio of the negative electrode plate to the battery after 800 cycles, indicating that the lithium-ion battery provided in this application can simultaneously have better rate performance, cycling performance, and swelling resistance.

It can be seen from Example 1-1 to Example 1-11 that the lithium-ion battery with the mass percentage of amorphous carbon, the mass percentage of the metal oxide and lithiated metal oxide, the mass percentage of the silicon grains and lithium silicate, the size of the silicon grains, and the mass percentage of the metal element within the ranges provided in this application has low alternating-current impedance, high rate performance and cycling capacity retention rate, and low swelling rate ratio of the negative electrode plate to the battery after 800 cycles, indicating that the lithium-ion battery provided in this application has low alternating-current impedance and desirable rate performance, cycling performance, and swelling resistance.

**Table 3**

| | Mass percentage of silicon-oxygen composite material (%) | Y₁/Y₂ | I₁/I₂ | Energy density (Wh/L) | Rate performance (%) | Cycling capacity retention rate after 400 cycles (%) | Cycling swelling rate after 400 cycles (%) |
|---|---|---|---|---|---|---|---|
| Example 1-8 | 3 | 0.87 | 5.69 | 739 | 94.7 | 96.8 | 6.8 |
| Example 2-1 | 1 | 0.37 | 10.12 | 726 | 94.0 | 96.3 | 6.7 |
| Example 2-2 | 2 | 0.58 | 7.34 | 733 | 94.6 | 96.5 | 6.7 |
| Example 2-3 | 5 | 1.83 | 5.04 | 748 | 94.8 | 96.9 | 7.0 |
| Example 2-4 | 7 | 2.42 | 4.57 | 755 | 94.5 | 96.5 | 7.1 |
| Example 2-5 | 10 | 3.6 | 3.95 | 766 | 94.2 | 95.7 | 7.2 |
| Example 2-6 | 0.5 | 0.24 | 14.37 | 721 | 93.8 | 95.6 | 6.6 |

The value of I₁/I₂ and the mass percentage of the silicon-oxygen composite material typically affect the performance of the lithium-ion battery, for example, energy density, rate performance, cycling performance, and swelling resistance. It can be seen from Example 1-8 and Example 2-1 to Example 2-6 that the lithium-ion battery with the value of I₁/I₂ and the mass percentage of the silicon-oxygen composite material within the ranges provided in this application has higher energy density, rate performance, and cycling capacity retention rate, and low cycling swelling rate, indicating that the lithium-ion battery provided in this application has desirable rate performance, cycling performance, and swelling resistance while having high energy density.

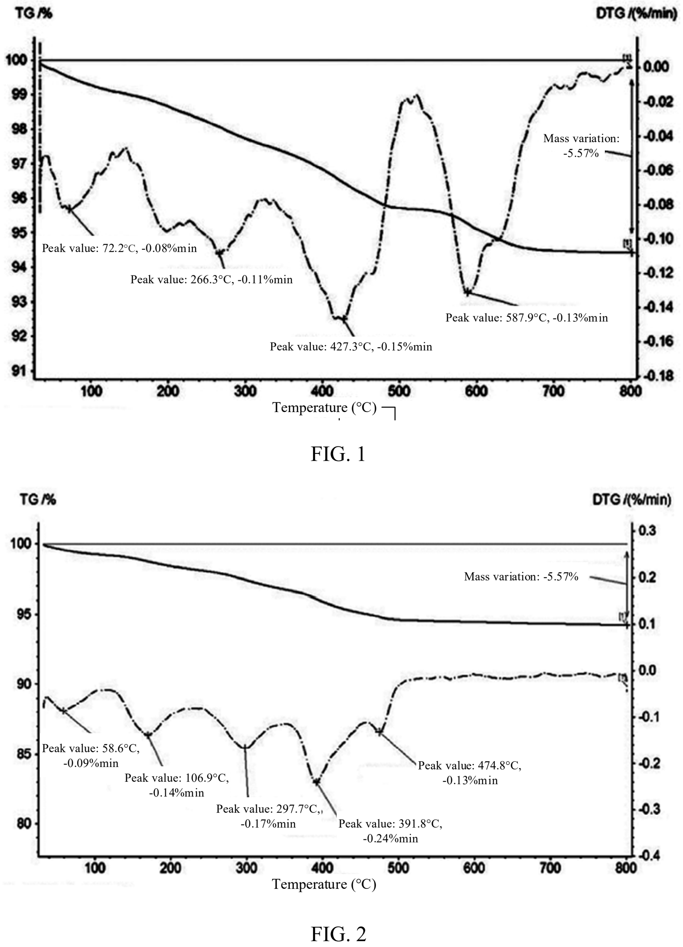

FIG. 1 and FIG. 2 show a thermogravimetry (TG) curve and a differential thermogravimetry (DTG) curve of the negative electrode plates in Example 1-8 and Comparative Example 1, respectively. It can be seen from FIG. 1 that a peak intensity Y₁ of the DTG curve of the negative electrode plate in Example 1-8 at 587.9°C is - 0.13%min, a peak intensity Y₂ at 427.3°C is -0.15%min, and the value of Y₁/Y₂ is calculated as 0.87. In FIG. 1, a peak at 500°C to 700°C corresponds to decomposition of a silicon-containing organic lithium salt; a peak at 350°C to 450°C corresponds to decomposition of a lithium salt with no silicon; and the value of Y₁/Y₂ reflects a percentage ratio of the silicon-containing organic lithium salt to the lithium salt with no silicon, where a higher peak intensity indicates a higher percentage of a lithium salt corresponding to this peak. It can be seen from FIG. 2 that no endothermic peak is present in the DTG curve of the negative electrode plate in Comparative Example 1 at 500°C to 700°C, indicating that the negative electrode plate in Comparative Example 1 contains no silicon-containing organic lithium salt, that is, Y₁ is 0%min. The peak intensity at 391.8°C within the range of 350°C to 450°C is -0.24%min, corresponding to decomposition of a lithium salt with no silicon, and a value of Y₁/Y₂ is calculated as 0.

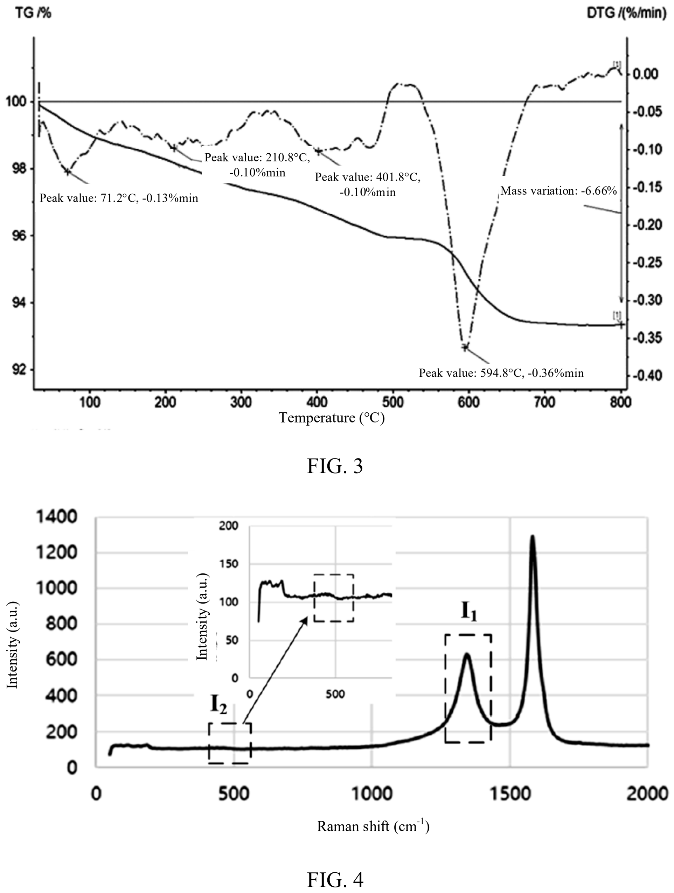

FIG. 3 shows a TG curve and a DTG curve of the negative electrode plate in Example 2-5. It can be seen from FIG. 3 that a peak intensity Y₁ of the DTG curve of the negative electrode plate in Example 2-5 at 594.8°C is -0.36%min, a peak intensity Y₂ at 401.8°C is -0.10%min, and a value of Y₁/Y₂ is calculated as 3.6.

FIG. 4 shows a Raman spectrum of the negative electrode plate in Example 1-8. A peak intensity I₁ of the Raman spectrum of the negative electrode plate in Example 1-8 at 1342.1 cm⁻¹ is 632.9, a peak intensity I₂ at 421.9 cm⁻¹ is 111.2, and a value of I₁/T₂ is calculated as 5.69.

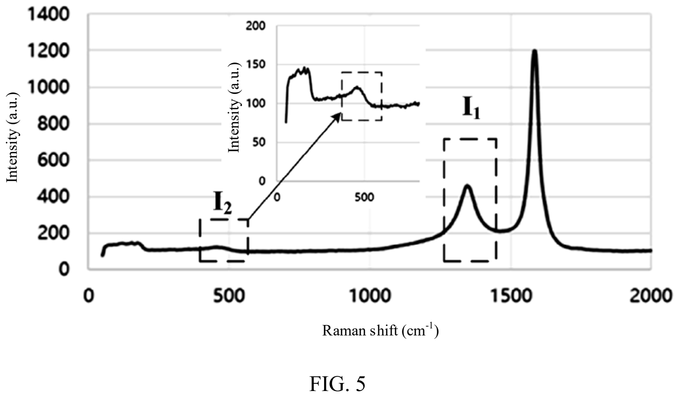

FIG. 5 shows a Raman spectrum of the negative electrode plate in Example 2-5. A peak intensity I₁ of the Raman spectrum of the negative electrode plate in Example 2-5 at 1345.4 cm⁻¹ is 459.3, a peak intensity I₂ at 429.2 cm⁻¹ is 116.3, and a value of I₁/T₂ is calculated as 3.95.

It should be noted that relational terms such as "first" and "second" herein are only used to distinguish one entity or operation from another entity or operation, and do not necessarily require or imply that there is any such actual relationship or order between these entities or operations. In addition, the terms "comprise", "include", or any other variations thereof are intended to cover non-exclusive inclusions, such that a process, method, article or device including a series of elements not only includes these elements, but also includes other elements which are not expressly listed, or further includes elements which are inherent to such process, method, article or device.

All embodiments in this specification are described in a related manner. For a part that is the same or similar between some embodiments, reference may be made between some embodiments. Each embodiment focuses on differences from other embodiments.

The foregoing descriptions are merely preferred examples of this application, and are not intended to limit the protection scope of this application. Any modification, equivalent replacement, improvement, or the like made without departing from the spirit and principle of this application shall fall within the protection scope of this application.

## Claims

1. A secondary battery, comprising a negative electrode plate, wherein the negative electrode plate comprises a negative electrode current collector and a negative electrode active substance layer provided on at least one surface of the negative electrode current collector; the negative electrode active substance layer comprises a negative electrode active substance; the negative electrode active substance comprises a silicon-oxygen composite material; and
a peak intensity of a differential thermogravimetry curve of the negative electrode plate at 500°C to 700°C is Y₁, and a peak intensity of the differential thermogravimetry curve of the negative electrode plate at 350°C to 450°C is Y₂, wherein 0.1≤Y₁/Y₂≤4.

2. The secondary battery according to claim 1, wherein 0.5≤Y₁/Y₂≤2.5.

3. The secondary battery according to claim 1 or 2, wherein a peak intensity of a Raman spectrum of the negative electrode plate at 1200 cm⁻¹ to 1500 cm⁻¹ is I₁, and a peak intensity of the Raman spectrum of the negative electrode plate at 300 cm⁻¹ to 600 cm⁻¹ is I₂, wherein 2≤I₁/I₂≤15.

4. The secondary battery according to any one of claims 1 to 3, wherein Dᵥ50 of the silicon-oxygen composite material is 3 µm to 15 µm, and a specific surface area of the silicon-oxygen composite material is 0.2 m²/g to 8 m²/g.

5. The secondary battery according to any one of claims 1 to 4, wherein the silicon-oxygen composite material is a core-shell structure; the silicon-oxygen composite material comprises a core, a first shell layer, and a second shell layer, the first shell layer and the second shell layer being provided on at least part of a surface of the core; the core comprises silicon grains and lithium silicate; the first shell layer comprises amorphous carbon; and the second shell layer comprises a metal oxide and a lithiated metal oxide, wherein
the metal oxide comprises at least one of aluminum oxide, titanium dioxide, or niobium pentoxide.

6. The secondary battery according to claim 5, wherein based on mass of the silicon-oxygen composite material, a mass percentage of the amorphous carbon is 1% to 5%, a mass percentage of the metal oxide and lithiated metal oxide is 1% to 5%, and a sum of mass percentages of the silicon grains and lithium silicate is 92% to 98%.

7. The secondary battery according to claim 5 or 6, wherein the silicon grains have a size of 0.5 nm to 10 nm.

8. The secondary battery according to any one of claims 5 to 7, wherein the second shell layer comprises a metal element; the metal element comprises at least one of aluminum, titanium, or niobium; and based on mass of the second shell layer, a mass percentage of the metal element is 0.1% to 1%.

9. The secondary battery according to any one of claims 1 to 8, wherein the negative electrode active substance further comprises graphite; and based on a sum of masses of the silicon-oxygen composite material and the graphite, a mass percentage of the silicon-oxygen composite material is 1% to 15%.

10. The secondary battery according to any one of claims 1 to 9, wherein in a charge and discharge cycling test of the secondary battery using stepped charging at 3C and discharging at 0.5C at 25+1°C, when the number of cycles of the secondary battery is greater than or equal to 800, a swelling rate ratio of the negative electrode plate to the secondary battery is 0.5 to 4.

11. An electronic apparatus, comprising the secondary battery according to any one of claims 1 to 10.
